# DEMANDE DE BREVET EUROPEEN

(11) **EP 1 260 566 A2**
(43) Date de publication de la demande: **27.11.2002**
(21) Numéro de dépôt: 02291247.1
(22) Date de dépôt: 21.05.2002
(51) Int. Cl.: C09J 123/16, C09J 123/08, C09J 123/06, C09J 153/00

(54) **Films adhésifs de protection**

(30) Priorité: 22.05.2001 FR 0106706
(71) Demandeur: NOVACEL, F-76250 Deville-les-Rouen (FR)
(72) Inventeur: Jenny, Isabelle, 76000 Rouen (FR); Korane, Richard J., Centerville, Ohio 45459 (US); Levebvre, Catherine, 76130 Mont-Saint-Aignan (FR)
(74) Mandataire: Nevant, Marc

(57) **Abrégé**

La présente invention concerne un film adhésif de protection comprenant une couche support et une couche adhésive formée d'une composition adhésive comprenant :
(A) au moins un composé choisi parmi un polyéthylène radicalaire basse densité ; un copolymère d'éthylène et d'un monomère oléfinique en C₃-C₈; un copolymère d'éthylène et de propylène ; un éthylène/propylène/diène; un copolymère d'éthylène et d'acétate de vinyle ; un copolymère d'éthylène et de dérivé acrylique ; un copolymère styrène-copolymère d'éthylène et de butylène-styrène ; un copolymère styrène-butadiène-styrène ; un copolymère styrène-isoprène-styrène ; un copolymère éthylène-styrène ; une résine tackifiante ; et leurs mélanges ; et
(B) un copolymère séquencé contenant au moins deux blocs poly(hydrocarbure aromatique monovinylique) et au moins un bloc poly(diène conjugué) hydrogéné ; et/ou un polybutène-1.

## Description

L'invention concerne un film adhésif sensible à la pression obtenu à partir d'une composition adhésive spécifique.

L'invention trouve application notamment dans le domaine de la protection des surfaces telles que les matières plastiques en plaques (PMMA, PC, PVC ...), les surfaces pré-revêtues (surfaces pré-laquées, collaminées ...), les stratifiés et mobiliers, les profilés plastiques, les métaux nus (aluminium, inox ...), les surfaces automobiles, dont notamment les carrosseries.

Les films dits « sensibles à la pression » sont destinés à la protection temporaire de surfaces ; dans cette application on recherche généralement un niveau adhésif tel que le film ait une adhérence suffisante sur la surface à protéger, et puisse être enlevé facilement et sans laisser de trace d'adhésif.

Il existe à ce jour différentes catégories de films de protection de surfaces. On peut notamment citer les films en polyoléfine traités corona, les films constitués de polyoléfine revêtue d'un adhésif acrylique (en phase solvant ou aqueuse), les films constitués de polyoléfine revêtue d'un adhésif caoutchouc, les films obtenus par co-extrusion d'une couche support à base de polyoléfine et d'une couche adhésive spécifique.

Tous ces films présentent cependant des inconvénients, qui ne permettent pas de répondre de manière satisfaisante au « cahier des charges » rappelé ci-dessus :
- les films en polyoléfine traités corona ont des caractéristiques adhésives fluctuantes et difficilement maîtrisables, et doivent impérativement être appliqués à chaud ; de plus, ils n'adhèrent plus une fois décollés de la surface qu'ils protègent ;
- les films constitués de polyoléfine revêtue d'un adhésif acrylique n'ont pas un comportement adhésif adéquat pour la protection temporaire des matières plastiques lisses et de l'aluminium ; la qualité de la colle et/ou de l'enduction peut entraîner des marquages des surfaces PVC, aluminium, automobile, après pose ou après des tests en température. Par ailleurs, ces films peuvent poser des problèmes de "pollution de surface" après déprotection, invisible à l'oeil nu. Enfin, le coût de ces films est élevé car leur obtention nécessite deux étapes (co-extrusion du film + enduction de la colle), et, lorsque l'adhésif utilisé est en phase solvant, il est impératif de prévoir un dispositif de récupération de solvant et/ou de dépollution pour satisfaire aux contraintes réglementaires et environnementales ;
- les films constitués de polyoléfine revêtue d'un adhésif caoutchouc naturel n'ont pas de tenue aux UV si l'application nécessite l'utilisation d'un film transparent. Leur coût est également élevé, pour les mêmes raisons que celles indiquées ci-dessus ;
- les films de protection obtenus par co-extrusion d'une couche support à base de polyoléfine et d'une couche adhésive spécifique, par exemple à base d'EVA ou de PE, et de résine tackifiante, sont plus particulièrement destinés à protéger les surfaces en matières plastiques et plus généralement les surfaces lisses et brillantes.

La présente invention se propose de remédier à ces inconvénients, et a pour objet des compositions adhésives permettant l'obtention de films adhésifs de protection temporaire de surfaces qui sont compatibles avec tous types de surfaces, en particulier les surfaces pré-revêtues telles que les surfaces pré-laquées (notamment au moyen de laques polyester et PVDF) et les surfaces collaminées, les profilés plastiques et mobiliers, les stratifiés, les métaux nus (aluminium, inox ...), les surfaces automobiles, dont notamment les carrosseries.

Ainsi, selon un premier aspect, l'invention concerne un film adhésif de protection comprenant une couche support et une couche adhésive formée d'une composition adhésive comprenant :
(A) au moins un composé choisi parmi un polyéthylène radicalaire basse densité (PEbdr) ; un copolymère d'éthylène et d'un monomère oléfinique en C₃-C₈ (PE linéaire) ; un copolymère d'éthylène et de propylène (EPM) ; un éthylène/propylène/diène (EPDM) ; un copolymère d'éthylène et d'acétate de vinyle (EVA) ; un copolymère d'éthylène et de dérivé acrylique (EDA) ; un copolymère styrène-copolymère d'éthylène et de butylène-styrène (SEBS) ; un copolymère styrène-butadiène-styrène (SBS) ; un copolymère styrène-isoprène-styrène (SIS) ; un copolymère éthylène-styrène (ES) ; une résine tackifiante ; et leurs mélanges ; et
(B) un copolymère séquencé contenant au moins deux blocs poly(hydrocarbure aromatique monovinylique) et au moins un bloc poly(diène conjugué) hydrogéné, et/ou un polybutène-1.

La composition adhésive conforme à l'invention comprend un mélange en toutes proportions des constituants (A) et (B). Généralement, on utilise de 5 à 95 % en poids, de préférence de 10 à 80 % en poids, du constituant (B).

Au sens de la présente invention, la composition adhésive comprenant un mélange des constituants (A) et (B) couvre toutes les combinaisons des différents composants du constituant (A), seuls ou en mélange, avec les différents composants du constituant (B), seuls ou en mélange.

Conformément à l'invention, le constituant (A) est au moins un « polymère » choisi parmi les PEbd, les PE linéaires, les EVA, les EDA, les EPM, les EPDM, les SEBS, les SBS, les SIS et les ES ; une résine tackifiante ; et les mélange de ces composés. Par « mélange de ces composés », il faut entendre au sens de la présente invention un mélange en toutes proportions de plusieurs polymères du même type, ou d'un ou plusieurs polymères d'un premier type avec un ou plusieurs polymères d'un ou plusieurs autres types, le cas échéant avec une ou plusieurs résines tackifiantes.

Une composition adhésive préférée est celle où le constituant (A) est un PE linéaire, un EVA, un EDA, une résine tackifiante, ou un mélange de ces composés, ledit mélange étant tel que défini ci-dessus.

Une autre composition adhésive préférée est celle où le constituant (B) comprend du polybutène-1 ou un mélange de polybutène-1 et de copolymère séquencé contenant au moins deux blocs poly(hydrocarbure aromatique monovinylique) et au moins un bloc poly(diène conjugué) hydrogéné.

Une composition adhésive également préférée est celle comprenant :
(A) au moins un composé choisi parmi un polyéthylène radicalaire basse densité ; un copolymère d'éthylène et d'un monomère oléfinique en C₃-C₈ ; un copolymère d'éthylène et de propylène ; un éthylène/propylène/diène; un copolymère d'éthylène et d'acétate de vinyle ; un copolymère d'éthylène et de dérivé acrylique ; un copolymère styrène-copolymère d'éthylène et de butylène-styrène ; un copolymère styrène-butadiène-styrène ; un copolymère styrène-isoprène-styrène ; un copolymère éthylène-styrène ; et leurs mélanges ; et
(B) un copolymère séquencé contenant au moins deux blocs poly(hydrocarbure aromatique monovinylique) et au moins un bloc poly(diène conjugué) hydrogéné.

Les PEbdr utilisables dans le cadre de la présente invention ont une densité, mesurée selon la norme ASTM D 1505, comprise dans la gamme de 0,915 à 0,925 et un indice de fluidité, mesuré selon la norme ASTM 1238, compris dans la gamme de 0,1 à 40, de préférence dans la gamme de 0,1 à 10 dg/min. A titre d'exemple on peut citer le produit commercialisé sous la dénomination Lupolen® 2420F (Basell).

Les PE linéaires sont des copolymères d'éthylène et d'un monomère oléfinique en C₃-C₈, tel que le propène, le butène, l'hexène, le méthylpentène ou l'octène (qui est appelé par la suite « co-monomère »). Ces PE linéaires peuvent être obtenus par exemple par catalyse du type Ziegler-Natta ou du type métallocène. Avantageusement, on utilise des PE linéaires basse ou très basse densité, c'est-à-dire avec une densité, mesurée selon la norme ASTM D 1505, comprise dans la gamme de 0,860 à 0,936 et ayant un indice de fluidité, mesuré selon la norme ASTM 1238, compris dans la gamme de 0,1 à 40, de préférence dans la gamme de 0,1 à 10 dg/min ; ces PE linéaires ont de préférence un taux de co-monomère inférieur ou égal à 30 % en poids. A titre d'exemple on peut citer les produits commercialisés sous la dénomination Engage® (DuPont Dow Elastomers), Affinity® (Dow), Exact® (Dex Plastomer), Stamylan® (DSM), Attane® (Dow).

Conformément à l'invention, les EVA ont un taux d'acétate de vinyle (VA) inférieur ou égal à 80 % en poids, de préférence inférieur ou égal à 40 % en poids. Ces EVA ont avantageusement un indice de fluidité, mesuré selon la norme ASTM 1238, compris dans la gamme de 0,1 à 40, de préférence dans la gamme de 0,1 à 10 dg/min. A titre d'exemple on peut citer les produits commercialisés sous la dénomination Levapren® (Bayer) et Greenflex® (Polimeri Europa).

Les EDA ont de préférence un taux de dérivé acrylique, tel que par exemple l'acrylate de butyle et/ou l'acide (méth)acrylique, inférieur ou égal à 40 % en poids. Ces EDA ont avantageusement un indice de fluidité, mesuré selon la norme ASTM 1238, compris dans la gamme de 0,1 à 40, de préférence dans la gamme de 0,1 à 10 dg/min. A titre d'exemple on peut citer le produit commercialisé sous la dénomination Lotryl® (Elf Atochem).

Les EPM ont de préférence une densité, mesurée selon la norme ASTM D 1505, comprise dans la gamme de 0,84 à 0,90 et avantageusement un taux de propylène compris dans la gamme de 25 à 60 % en poids. A titre d'exemple on peut citer le produit commercialisé sous la dénomination Adflex® (Basell).

Les EPDM ont de préférence une densité, mesurée selon la norme ASTM D 1505, comprise dans la gamme de 0,86 à 0,90. Avantageusement, ils ont un taux de propylène compris dans la gamme de 25 à 60 % en poids et un taux de diène, tel que le 1,4-hexadiène ou l'éthylidène norbornène, inférieur ou égal à 6 % en poids. A titre d'exemple on peut citer le produit commercialisé sous la dénomination Nordel® (Dupont Dow Elastomers).

Les SEBS, les SBS, et les SIS ont avantageusement un taux de styrène inférieur ou égal à 50 % en poids, de préférence compris dans la gamme de 5 à 45 % en poids, de préférence encore dans la gamme de 10 à 25 % en poids ; de manière également avantageuse, ces polymères ont un taux de diblocs SEB, SB ou SI inférieur ou égal à 70 % en poids, de préférence inférieur ou égal à 30 % en poids. A titre d'exemple de SBS, on peut citer le produit commercialisé sous la dénomination Kraton® D1118X (Kraton Polymers). A titre d'exemple de SIS, on peut citer le produit commercialisé sous la dénomination Vector® 4114 (Exxon). A titre d'exemple de SEBS, on peut citer le produit commercialisé sous la dénomination Kraton ® G1657 (Kraton Polymers).

Les ES ont avantageusement un taux de styrène compris dans la gamme de 5 à 85 % en poids, et de préférence un indice de fluidité, mesuré selon la norme ASTM 1238, compris dans la gamme de 0,1 à 40, de préférence dans la gamme de 0,1 à 10 dg/min. A titre d'exemple, on peut citer le produit commercialisé sous la dénomination Interpolymer® index (Dow).

Les résines tackifiantes utilisées dans le cadre de l'invention sont bien connues de l'homme du métier et peuvent être choisies notamment parmi les résines de colophane, les résines terpène/phénol, et les résines obtenues à partir de nappes pétrolières en C₅, (C₅)₂ et/ou C₉ qui peuvent ensuite être partiellement ou totalement hydrogénées. Ces résines ont avantageusement une température de ramollissement, mesurée selon la méthode "Ring and Ball" (norme ASTM E 28), inférieure ou égale 140°C, généralement comprise dans la gamme de 75 à 140°C, de préférence dans la gamme de 75 à 125°C. A titre d'exemple, on peut citer les produits commercialisés sous la dénomination Escorez® (Exxon), Sylvares® (Arizona), Permalyn® (Hercules).

Le constituant (B) de la composition adhésive conforme à l'invention est un copolymère séquencé contenant au moins deux blocs poly(hydrocarbure aromatique monovinylique) et au moins un bloc poly(diène conjugué) hydrogéné, un polybutène-1 ou un mélange de polybutène-1 et dudit copolymère séquencé.

Conformément à l'invention, le constituant (B) comprend également les mélanges en toutes proportions de plusieurs polymères du même type, ou d'un ou plusieurs polymères du premier type avec un ou plusieurs polymères de l'autre type.

Le copolymère séquencé peut être linéaire ou radial, du type comprenant des copolymères triblocs linéaires (ABA), des copolymères séquencés multi-bras ((AB)ₙX), et des copolymères séquencés asymétriques tels que ((AB)ₙX(B')ₘ), où A représente un bloc polymère d'hydrocarbure aromatique vinylique ; B et B' représentent un bloc polymère diène-conjugué hydrogéné ; n est un entier égal à au moins 2, de préférence compris dans la gamme de 2 à 6 ; m est un entier égal à au moins 1, de préférence compris dans la gamme de 1 à 4 ; et X représente le résidu d'un agent de couplage. Le copolymère séquencé peut contenir jusqu'à 40 % en poids, de préférence jusqu'à 30 % en poids, et de préférence encore jusqu'à 25 % en poids, d'un copolymère diblocs AB. Lorsqu'il est présent, ce copolymère diblocs représente généralement au moins 5 % en poids, de préférence au moins 10 % en poids, du copolymère séquencé. Le poids moléculaire apparent du copolymère diblocs AB, s'il est présent, est typiquement compris dans la gamme de 40 000 à 270 000.

Dans le copolymère séquencé, au moins 80 %, de préférence au moins 90 %, et de préférence encore au moins 95 % des double liaisons du (des) bloc(s) diène-conjugué(s) sont hydrogénées.

Le monomère aromatique monovinylique est typiquement choisi parmi le styrène, un (C₁-C₄)alkylstyrène, un (C₁-C₄)dialkylstyrène.

Le monomère diène-conjugué contient typiquement de 4 à 8 atomes de carbone comme par exemple le 1,3-butadiène, le 2-méthyl-1,3-butadiène (isoprène), le 2,3-diméthyl-1,3-butadiène et leurs mélanges. La teneur en 1,2-vinyl d'un bloc butadiène avant l'hydrogénation est typiquement d'au moins 25 % en poids, de préférence comprise dans la gamme de 30 à 90 % en poids, et de préférence encore comprise dans la gamme de 35 à 80 % en poids.

La teneur en hydrocarbure aromatique monovinylique du copolymère séquencé final est inférieure ou égale à 50 % en poids, de préférence comprise dans la gamme de 5 à 45 % en poids, de préférence encore dans la gamme de 10 à 25 % en poids, par rapport au poids du copolymère séquencé. Le poids moléculaire apparent total du copolymère séquencé est de préférence compris dans la gamme de 70 000 à 310 000.

Avantageusement, le copolymère séquencé est un caoutchouc synthétique à base de styrène, notamment un polymère séquencé de type A-B-A comme par exemple le styrène-copolymère d'éthylène et de butylène-styrène (SEBS) ou le styrène-copolymère d'éthylène et de propylène-styrène (SEPS), le SEBS étant préféré. Ces caoutchoucs ont avantageusement un taux de styrène tel que mentionné ci-dessus pour l'hydrocarbure aromatique monovinylique, et un taux de diblocs SEB ou SEP inférieur ou égal à 70 % en poids, de préférence inférieur ou égal à 30 % en poids. A titre d'exemple de SEBS on peut citer le produit commercialisé sous la dénomination Kraton® G1657 (Kraton Polymers).

Selon la présente invention, lorsque le constituant (A) représente un SEBS seul, alors le constituant (B) ne représente pas un copolymère séquencé seul tel que défini ci-dessus.

Le polybutène-1, qui peut être un homopolymère ou un copolymère de butène-1, contient au moins 80 %, de préférence au moins 95 % et de préférence encore au moins 97 % en poids de parties isotactiques. Le poids moléculaire moyen en poids est typiquement dans la gamme de 60 000 à 1 000 000, déterminé par chromatographie par perméation de gel.

Des polybutènes-1 appropriés ont de préférence une densité comprise dans la gamme de 0,875 à 0,925, de préférence encore dans la gamme de 0,890 à 0,920. Leur indice de fluidité est compris dans la gamme de 0,05 à 400, de préférence dans la gamme de 0,1 à 200, de préférence encore dans la gamme de 0,2 à 20, et de manière tout à fait préférée dans la gamme de 0,4 et 5 dg/min, mesuré selon la norme ASTM 1238.

Si on utilise un copolymère de butène-1, le taux en co-monomère (autre que le butène-1) est compris dans la gamme de 1 à 50 % en mole, de préférence dans la gamme de 1 à 30 % en mole. Ce co-monomère peut être de l'éthylène, du propylène ou une α-oléfine ayant de 5 à 8 atomes de carbone.

A titre d'exemple de polybutène-1, on peut citer le produit commercialisé sous la dénomination PB 0300 (Montell).

Le constituant (B) peut également comprendre au moins un composé choisi parmi une résine tackifiante telle que définie ci-dessus pour le constituant (A), une résine aromatique ou un plastifiant. Selon un mode de réalisation avantageux de l'invention, le constituant (B) comprend :
- 100 parties en poids de copolymère séquencé ;
- 10 à 60 parties en poids de polybutène-1 ;
- 20 à 80 parties en poids de résine tackifiante ;
- 0 à 40 parties en poids de résine aromatique ;
- 0 à 25 parties en poids de plastifiant.

La composition adhésive conforme à l'invention peut également comprendre un ou plusieurs additifs tels que des agents stabilisants, des agents anti-bloquant, des agents anti-UV, des agents barrière aux UV, des agents plastifiants.

Ces additifs sont généralement présents en une quantité comprise dans la gamme de 0,1 à 10 % en poids, par rapport au poids de la composition.

La composition adhésive conforme à l'invention peut être préparée de manière conventionnelle par mélange des constituants (A) et (B), ou bien encore par mélange des différents ingrédients composant chacun desdits constituants.

La couche support du film adhésif est formée d'une composition support à base de polyoléfine. Cette couche support peut être du type monocouche ou du type multicouches. Chaque couche comprend avantageusement un polyéthyiène radicalaire (PE) ; un PE linéaire basse ou très basse densité ; du polypropylène (PP) ; un EPM ; ou un mélange de ces composés. L'expression « mélange de ces composés » inclut au sens de la présente invention un mélange de plusieurs polymères du même type, ou d'un ou plusieurs polymères d'un premier type avec un ou plusieurs polymères d'un ou plusieurs autres types.

De préférence, la couche support comprend au moins une couche constituée d'un mélange de polyéthylène radicalaire, de polypropylène et de copolymère d'éthylène et de propylène.

La couche support possède avantageusement une densité comprise dans la gamme de 0,84 à 0,960, de préférence dans la gamme de 0,900 à 0,940. Elle représente généralement entre 50 et 99 % de l'épaisseur totale du film.

Le PE radicalaire peut être indifféremment basse densité (0,915 ≤ d ≤ 0,925), comme par exemple le produit commercialisé sous la dénomination Lupolen® 2420 F (Basell) ; moyenne densité (0,925 < d ≤ 0,940), comme par exemple le produit commercialisé sous la dénomination Lupolen® 3521 C (BASF) ; ou haute densité (0,940 < d ≤ 0,960), comme par exemple le produit commercialisé sous la dénomination Lupolen® 3721 C (BASF).

Le PE linéaire basse ou très basse densité et l'EPM sont tels que définis précédemment pour le constituant (A).

Le PP possède une densité comprise dans la gamme de 0,890 à 0,910. A titre d'exemple, on peut citer les produits commercialisés sous la dénomination Moplen® (Montell).

Pour tous ces polymères, la densité est mesurée selon la norme ASTM D 1505. Lesdits polymères possèdent avantageusement un indice de fluidité, mesuré selon la norme ASTM 1238, compris dans la gamme de 0,1 à 40, de préférence dans la gamme de 0,1 à 10 dg/min.

Cette couche support peut également contenir un ou plusieurs additifs tels que des agents de matage, des agents glissants, des colorants, des stabilisants UV, des barrières UV, des antioxydants, des agents anti-bloquant. Lorsque la couche support est du type multicouches, chacune des couches peut contenir lesdits additifs.

Ces additifs sont généralement présents en une quantité comprise dans la gamme de 0,1 à 25 % en poids, par rapport au poids de la composition.

Selon un mode de réalisation particulier, le film adhésif conforme à l'invention comprend de l'autre côté de la couche support (c'est-à-dire du côté qui n'est pas en contact avec la couche adhésive) une couche de protection avantageusement anti-adhérente. Une telle couche de protection est bien connue de l'homme du métier.

Les films de protection adhésifs selon l'invention présentent un niveau adhésif, mesuré par une force de décollement (pelage 180°, vitesse de pelage = 300 mm/min, mesure à température ambiante), compris dans la gamme de 1 à 500 cN/cm et peuvent être retirés des matériaux sur lesquels ils sont appliqués sans difficulté et sans laisser de résidus.

Ces films adhésifs peuvent être notamment obtenus par co-extrusion de la couche support et de la couche adhésive. On peut employer indifféremment la méthode de co-extrusion coulée (de l'anglais « cast co-extrusion ») ou de co-extrusion gonflage (de l'anglais « blown co-extrusion »). Ces méthodes sont bien connues de l'homme du métier, et sont décrites par exemple dans l'ouvrage « Encyclopedia of Chemical Technology » (Kirk-Othmer), 1996, volume 19, pages 290-316. Il est également possible d'utiliser la méthode de couchage (de l'anglais « cast coating »).

Ainsi selon un second aspect, l'invention concerne un procédé de préparation d'un film de protection par co-extrusion d'une couche support et d'une couche adhésive telles que définies ci-dessus. Ce procédé comprend les étapes suivantes :
a) l'alimentation d'une première extrudeuse en composition adhésive destinée à former la couche adhésive, et d'une seconde extrudeuse en composition support destinée à former la couche support ;
b) la fusion de la composition adhésive et de la composition support et l'acheminement des compositions substantiellement fondues, au même moment, vers une filière en communication avec chacune des extrudeuses ; et
c) la co-extrusion d'un film comprenant la couche adhésive et la couche support.

Lorsque la couche support est du type multicouches, on comprend aisément qu'il convient d'utiliser à l'étape a) autant d'extrudeuses que de couches constituant ladite couche support.

Avantageusement, les films ainsi obtenus ont une épaisseur supérieure à 10 µm, de préférence comprise dans la gamme de 15 à 90 µm.

Selon un troisième aspect, l'invention concerne les articles protégés par les films sus-mentionnés.

L'invention est illustrée par les exemples ci-après, donnés à titre purement indicatif. L'équipement de co-extrusion trois couches, utilisé dans les exemples 1-3 et 5 est du type "Contracool" commercialisé par la Société Battenfeld, avec système de régulation d'épaisseur "Autoprofil" ; l'équipement utilisé dans l'Exemple 4 est commercialisé par la Société Windmöller et Hölscher.

Les plages de températures suivantes sont utilisées dans chacune des extrudeuses :
- extrudeuse N° 1 : 140-220°C
- extrudeuse N°2 : 140-220°C
- extrudeuse N° 3 : 110-220°C.

### Exemple 1

On prépare une composition adhésive en mélangeant 10 % en poids de composition disponible sous la dénomination Kraton® MD 6649 (Kraton Polymers) et 90 % en poids de polyéthylène linéaire de densité 0,902, ayant un taux de co-monomère octène de 12 % en poids.

Sur un équipement de co-extrusion trois couches présentant 3 extrudeuses, on introduit dans l'extrudeuse n° 1 un polyéthylène radicalaire de densité 0,924 et d'indice de fluidité 0,7 ; dans l'extrudeuse n° 2 un mélange 90/10 en poids de polyéthylène radicalaire de densité 0,924 et d'indice de fluidité 0,7 et de polyéthylène linéaire (co-monomère : butène) de densité 0,925 et d'indice de fluidité 0,7 ; et dans l'extrudeuse n° 3 la composition adhésive préparée ci-dessus.

Par co-extrusion soufflage dans les conditions normales connues de l'homme du métier, on a obtenu un film adhésif de 70 µm d'épaisseur.

Ce film, appliqué sur une plaque de PVC ou de PMMA, présente un niveau adhésif, mesuré par une force de décollement (pelage 180°, vitesse de pelage = 300 mm/min, mesure à température ambiante) de 10 à 200 cN/cm (suivant la brillance du PVC ou du PMMA) avant thermoformage de la plaque. Cette valeur n'augmente pas après le thermoformage.

### Exemple 2

On prépare une composition adhésive en mélangeant 45 % en poids de composition disponible sous la dénomination Kraton® MD 6649 (Kraton Polymers) et 55 % en poids de polyéthylène linéaire de densité 0,912 et d'indice de fluidité 3,3.

Sur un équipement de co-extrusion trois couches présentant 3 extrudeuses, on introduit dans l'extrudeuse n° 1 un polyéthylène radicalaire de densité 0,924 et d'indice de fluidité 0,7 ; dans l'extrudeuse n° 2 un mélange 70/27/1,5/1,5 en poids de polyéthylène radicalaire de densité 0,924 et d'indice de fluidité 0,7, de polyéthylène radicalaire de densité 0,935 et d'indice de fluidité 0,8, d'un agent anti-UV et d'un agent barrière UV ; et dans l'extrudeuse n° 3 la composition adhésive préparée ci-dessus.

Par co-extrusion soufflage dans les conditions normales connues de l'homme du métier, on a obtenu un film adhésif de 35 µm d'épaisseur.

Ce film, appliqué sur une plaque de métal pré-laqué (laque de polyester possédant une brillance de 50), présente un niveau adhésif, mesuré par une force de décollement (pelage 180°, vitesse de pelage = 300 mm/min, mesure à température ambiante), de 150 à 200 cN/cm.
Cette valeur augmente peu lors des opérations de vieillissement à température.

### Exemple 3

On prépare une composition adhésive en mélangeant 10 % en poids de polyéthylène linéaire de densité 0,902 et d'indice de fluidité 1, 45 % en poids de SEBS (contenant 13 % en poids de styrène et 35 % en poids de diblocs) et 45 % en poids d'un mélange 50/50 en poids de SEBS (tel que défini ci-dessus) et de résine tackifiante (ayant une température de ramollissement de 120 °C).

Sur un équipement de co-extrusion trois couches présentant 3 extrudeuses, on introduit dans l'extrudeuse n° 1 un polyéthylène radicalaire de densité 0,924 et d'indice de fluidité 0,7 ; dans l'extrudeuse n° 2 un mélange 80/10/10 en poids de polypropylène de densité 0,90, de polyéthylène linéaire (co-monomère : butène) de densité 0,925 et d'indice de fluidité 0,7, et de mélange Maître blanc ; et dans l'extrudeuse n° 3 la composition adhésive préparée ci-dessus.

Par co-extrusion soufflage dans les conditions normales connues de l'homme du métier, on a obtenu un film adhésif de 60 µm d'épaisseur.

Ce film, appliqué sur un échantillon de carrosserie automobile, présente un niveau adhésif, mesuré par une force de décollement (pelage 180°, vitesse de pelage = 300 mm/min, mesure à température ambiante), de 200 à 300 cN/cm. Après un test représentatif d'une heure à 70°C puis déprotection, la laque automobile n'est nullement marquée par l'adhésif.

### Exemple 4

On prépare une composition adhésive en mélangeant 25 % en poids de composition disponible sous la dénomination Kraton® MD 6649 (Kraton Polymers) et 75 % en poids de polyéthylène linéaire de densité 0,902 et d'indice de fluidité 1, ayant un taux de co-monomère octène de 12 % en poids.

Sur un équipement de co-extrusion trois couches présentant 3 extrudeuses, on introduit dans les extrudeuses n° 1 et 2 un polyéthylène radicalaire de densité 0,924 et d'indice de fluidité 0,7 ; et dans l'extrudeuse n° 3 la composition adhésive préparée ci-dessus.

Par co-extrusion soufflage dans les conditions normales connues de l'homme du métier, on a obtenu un film adhésif de 50 µm d'épaisseur.

Ce film, appliqué sur une plaque d'acier inoxydable, présente un niveau adhésif, mesuré par une force de décollement (pelage 180°, vitesse de pelage = 300 mm/min, mesure à température ambiante), de 50 à 250 cN/cm et présente un comportement zippant à décachage très facile. De plus, ce film ne se décolle pas rapidement après une opération d'emboutissage profond.

### Exemple 5

On prépare une composition adhésive en mélangeant 8 % en poids de composition disponible sous la dénomination Kraton® MD 6649 (Kraton Polymers) et 92 % en poids de polyéthylène linéaire de densité 0,902 et d'indice de fluidité 1, ayant un taux de co-monomère octène de 12 % en poids.

Sur un équipement de co-extrusion trois couches présentant 3 extrudeuses, on introduit dans les extrudeuses n° 1 et 2 un polyéthylène radicalaire de densité 0,924 et d'indice de fluidité 0,7 ; et dans l'extrudeuse n° 3 la composition adhésive préparée ci-dessus.

Par co-extrusion soufflage dans les conditions normales connues de l'homme du métier, on a obtenu un film adhésif de 50 µm d'épaisseur.

Ce film, appliqué sur une plaque d'aluminium brillant, présente un niveau adhésif, mesuré par une force de décollement (pelage 180°, vitesse de pelage = 300 mm/min, mesure à température ambiante), de 50 à 150 cN/cm et présente un comportement zippant à décachage très facile. Ce film ne marque pas l'aluminium après une opération d'emboutissage.

## Revendications

1. Film adhésif de protection comprenant une couche support et une couche adhésive, dans lequel la couche adhésive est formée d'une composition adhésive constituée essentiellement de :
(A) au moins un composé choisi parmi un polyéthylène radicalaire basse densité ; un copolymère d'éthylène et d'un monomère oléfinique en C₃-C₈ ; un copolymère d'éthylène et de propylène ; un éthylène/propylène/diène ; un copolymère d'éthylène et d'acétate de vinyle ; un copolymère d'éthylène et de dérivé acrylique ; un copolymère styrène-copolymère d'éthylène et de butylène-styrène ; un copolymère styrène-butadiène-styrène ; un copolymère styrène-isoprène-styrène ; un copolymère éthylène-styrène ; une résine tackifiante ; et leurs mélanges ; et
(B) du polybutène-1 ou un mélange de polybutène-1 et d'un copolymère séquencé contenant au moins deux blocs poly(hydrocarbure aromatique monovinylique) et au moins un bloc poly(diène conjugué) hydrogéné.

2. Film adhésif de protection comprenant une couche support et une couche adhésive, dans lequel la couche adhésive est formée d'une composition adhésive constituée essentiellement de :
(A) au moins un composé choisi parmi un polyéthylène radicalaire basse densité ; un copolymère d'éthylène et d'un monomère oléfinique en C₃-C₈ ; un copolymère d'éthylène et de propylène ; un éthylène/propylène/diène ; un copolymère d'éthylène et d'acétate de vinyle ; un copolymère d'éthylène et de dérivé acrylique ; un copolymère styrène-copolymère d'éthylène et de butylène-styrène ; un copolymère styrène-butadiène-styrène ; un copolymère styrène-isoprène-styrène ; un copolymère éthylène-styrène ; et leurs mélanges ; et
(B) un copolymère séquencé contenant au moins deux blocs poly(hydrocarbure aromatique monovinylique) et au moins un bloc poly(diène conjugué) hydrogéné.

3. Film adhésif de protection selon la revendication 1 ou 2, dans lequel le polyéthylène radicalaire du constituant (A) a une densité comprise dans la gamme de 0,915 à 0,925, et de préférence un indice de fluidité compris dans la gamme de 0,1 à 40, de préférence dans la gamme de 0,1 à 10 dg/min.

4. Film adhésif de protection selon la revendication 1 ou 2, dans lequel le copolymère d'éthylène et d'un monomère oléfinique en C₃-C₈ du constituant (A) a un taux de co-monomère inférieur à 30 % en poids, et de préférence un indice de fluidité compris dans la gamme de 0,1 à 40, de préférence dans la gamme de 0,1 à 10 dg/min, ledit co-monomère étant de préférence choisi parmi le propène, le butène, l'hexène, le méthylpentène ou l'octène.

5. Film adhésif de protection selon la revendication 1 ou 2, dans lequel le copolymère d'éthylène et d'acétate de vinyle du constituant (A) a un taux d'acétate de vinyle inférieur ou égal à 80 % en poids, de préférence inférieur ou égal à 40 %, et avantageusement un indice de fluidité compris dans la gamme de 0,1 à 40, de préférence de 0,1 à 10 dg/min.

6. Film adhésif de protection selon la revendication 1 ou 2, dans lequel le copolymère d'éthylène et de dérivé acrylique du constituant (A) a un taux de dérivé acrylique inférieur ou égal à 40 % en poids, et avantageusement un indice de fluidité compris dans la gamme de 0,1 à 40, de préférence dans la gamme de 0,1 à 10 dg/min.

7. Film adhésif de protection selon la revendication 1 ou 2, dans lequel le copolymère d'éthylène et de propylène du constituant (A) a une densité comprise dans la gamme de 0,84 à 0,90, et avantageusement un taux de propylène compris dans la gamme de 25 à 60 % en poids.

8. Film adhésif de protection selon la revendication 1 ou 2, dans lequel l'éthylène/propylène/diène du constituant (A) a une densité comprise dans la gamme de 0,86 à 0,90, et avantageusement un taux de propylène compris dans la gamme de 25 à 60 % en poids, et un taux de diène inférieur ou égal à 6 % en poids.

9. Film adhésif de protection selon la revendication 1, dans lequel la résine tackifiante du constituant (A) a une température de ramollissement inférieure ou égale 140°C, généralement comprise dans la gamme de 75 à 140 °C, de préférence dans la gamme de 75 à 125°C.

10. Film adhésif de protection selon la revendication 1 ou 2, dans lequel le copolymère styrène-copolymère d'éthylène et de butylène-styrène, le copolymère styrène-butadiène-styrène ou le copolymère styrène-isoprène-styrène du constituant (A) ont chacun un taux de styrène inférieur ou égal à 50 % en poids, de préférence compris dans la gamme de 5 à 45 % en poids, et avantageusement un taux de diblocs inférieur ou égal à 70 % en poids.

11. Film adhésif de protection selon la revendication 1 ou 2, dans lequel le copolymère éthylène-styrène du constituant (A) a un taux de styrène compris dans la gamme de 5 à 85 % en poids, et avantageusement un indice de fluidité compris dans la gamme de 0,1 à 40, de préférence dans la gamme de 0,1 à 10 dg/min.

12. Film adhésif de protection selon l'une des revendications 1 à 11, dans lequel le copolymère séquencé du constituant (B) a une teneur en poly(hydrocarbure aromatique monovinylique) inférieure ou égale à 50 % en poids, de préférence comprise dans la gamme de 5 à 45 % en poids.

13. Film adhésif de protection selon la revendication 12, dans lequel le copolymère séquencé est un caoutchouc synthétique à base de styrène de type A-B-A choisi parmi le styrène-copolymère d'éthylène et de butylène-styrène ou le styrène-copolymère d'éthylène et de propylène-styrène, ledit caoutchouc ayant avantageusement un taux de diblocs inférieur ou égal à 70 % en poids.

14. Film adhésif de protection selon la revendication 1, dans lequel le polybutène-1 du constituant (B) est un copolymère de butène-1 dont le taux en co-monomère autre que le butène-1 est compris dans la gamme de 1 à 50 % en mole.

15. Film adhésif de protection selon la revendication 1, dans lequel le constituant
(B) contient également au moins un composé choisi parmi une résine tackifiante, une résine aromatique ou un plastifiant.

16. Film adhésif de protection selon la revendication 15, dans lequel le constituant (B) contient :
- 100 parties en poids de copolymère séquencé ;
- 10 à 60 parties en poids de polybutène-1 ;
- 20 à 80 parties en poids de résine tackifiante ;
- 0 à 40 parties en poids de résine aromatique ;
- 0 à 25 parties en poids de plastifiant.

17. Film adhésif de protection selon l'une des revendication 1 à 16, dans laquelle le constituant (B) représente environ de 5 à 95 % en poids de la composition adhésive.

18. Film adhésif de protection selon l'une des revendications 1 à 17, dans lequel la couche support comprend un polyéthylène radicalaire ; un copolymère d'éthylène et d'un monomère oléfinique en C₃-C₈ basse ou très basse densité; un polypropylène ; un copolymère d'éthylène et de propylène ; ou un mélange de ces composés.

19. Film adhésif de protection selon l'une des revendications 1 à 18, dans lequel la couche support est monocouche ou multicouches.

20. Procédé de préparation d'un film adhésif de protection tel que défini dans l'une des revendications 1 à 19, par co-extrusion de la couche support et de la couche adhésive, qui comprend les étapes suivantes :
a) l'alimentation d'une première extrudeuse en composition adhésive destinée à former la couche adhésive, et d'une seconde extrudeuse en composition support destinée à former la couche support ;
b) la fusion de la composition adhésive et de la composition support et l'acheminement des compositions substantiellement fondues, au même moment, vers une filière en communication avec chacune des extrudeuses ; et
c) la co-extrusion d'un film comprenant la couche adhésive et la couche support.

21. Article revêtu d'un film adhésif de protection tel que défini dans l'une des revendications 1 à 19 ou obtenu selon le procédé de la revendication 20.
